# EUROPEAN PATENT SPECIFICATION

(11) **EP 3 604 438 B1**
(45) Date of publication and mention of the grant of the patent: **12.02.2025**
(21) Application number: 18777037.5
(22) Date of filing: 20.03.2018
(51) Int. Cl.: C08L 59/04, C08K 3/22, C08K 3/26, C08K 3/40, C08L 23/16, C10M 169/04, C10N 30/06, C10N 50/00

(54) **RESIN COMPOSITION FOR ANTI-DUST SLIDING MEMBER, ANTI-DUST SLIDING MEMBER, AND MANUFACTURING METHOD THEREFOR, WINDOW-REGULATOR CARRIER PLATE, AND METHOD FOR REALIZING ANTI-DUST SLIDING PROPERTY**
HARZZUSAMMENSETZUNG FÜR STAUBSCHUTZGLEITELEMENT, STAUBSCHUTZGLEITELEMENT UND HERSTELLUNGSVERFAHREN DAFÜR, FENSTERHEBERTRÄGERPLATTE UND VERFAHREN ZUR ERZIELUNG EINER STAUBSCHUTZGLEITEIGENSCHAFT
COMPOSITION DE RÉSINE POUR ÉLÉMENT RÉSISTANT À LA POUSSIÈRE ET AU GLISSEMENT, ÉLÉMENT RÉSISTANT À LA POUSSIÈRE ET AU GLISSEMENT AINSI QUE PROCÉDÉ DE FABRICATION DE CELUI-CI, PLAQUE DE SUPPORT POUR LÈVE-GLACE, ET PROCÉDÉ DE DÉVELOPPEMENT DE RÉSISTANCE À LA POUSSIÈRE ET AU GLISSEMENT

(30) Priority: 31.03.2017 US 201715475522
(43) Date of publication of application: 05.02.2020
(73) Proprietor: Polyplastics Co., Ltd., Tokyo 108-8280 (JP)
(72) Inventor: KANDA Yuki, Fuji-shi Shizuoka 416-8533 (JP); MONMA Tomohiro, Fuji-shi Shizuoka 416-8533 (JP); UEDA Takanori, Farmington Hills, Michigan 48331 (US)
(74) Representative: Maiwald GmbH
(86) International application number: PCT/JP2018/010924
(87) International publication number: WO 2018/180736

(56) References cited:
- WO-A1-2016/051881
- WO-A1-2016/151946
- DE-A1- 102016 109 992
- JP-A- 2016 069 452
- JP-A- 2016 069 453
- JP-A- H04 264 152
- JP-A- H08 134 326
- JP-A- H08 143 748
- US-B1- 6 602 953

## Description

### Technical Field

The present invention relates to a window regulator carrier plate produced using a resin composition for a dust-resistant sliding member that uses a polyacetal resin.

### BACKGROUND ART

Polyacetal resins (hereafter also referred to as "POM resins") exhibit a variety of excellent physical and mechanical properties and are therefore widely used as engineering plastics in many applications. In particular, because POM resins exhibit excellent sliding properties, they are often used as sliding members such as bearings and gear components (Japanese Unexamined Patent Application Publication No. 2016-169344A).

The mechanism for raising and lowering the door glass in an automobile is called a window regulator. A window regulator has a carrier plate that supports the door glass, a guide rail that supports the carrier plate in a manner that enables up and down movement of the carrier plate, and a drive portion that raises and lowers the carrier plate along the guide rail. In this mechanism, when the door glass is being raised and lowered, because the carrier plate slides in a state supported by the guide rail, a material having excellent slidability must be used for the sliding portion, and a molded member formed using a polyacetal resin has typically been used.

Because this type of molded member is formed using a polyacetal resin having excellent sliding properties, it exhibits a consistent effect in terms of slidability. However, when dust such as sand and moisture such as rainwater penetrates inside the door, the same thinking cannot be applied. In other words, under these types of conditions, if up and down movement occurs with the members rubbing against one another, then various problems can arise, including the occurrence of abnormal noises known as squeak noises, and an increase in the amount of abrasion. The problem of squeak noises is particularly noticeable in semi-dry states.

It has typically been thought that, even under these types of conditions, abnormal noises could be suppressed, and good friction and wear resistance could be achieved by applying a grease to the sliding portion. However, recent developments have tended to focus on methods for addressing the above problems without using grease. For example, a method has been proposed in which the window regulator is produced using a special grade of polyacetal resin for just the sliding portion and using a standard grade polyacetal resin for the remaining portions. However, differentiating the materials for the sliding portion and the remaining portions raises other problems, including an increase in the workload required to assemble the mechanism, and an increase in costs. Accordingly, it is desirable that the type of molded member described above is produced using a single POM resin composition.

US 6 602 953 B1 describes a polyoxymethylene resin composition showing distinguished slidability (low coefficient of friction and low wear rate) without deteriorating the heat stability of the polyoxymethylene resin composition, when molded, and also showing a considerable improvement in thin-molding peeling insusceptibility, while preventing deterioration of slidability due to contact with a solvent. Moldings of this polyoxymethylene resin composition are suitable for sliding components in automobiles. The polyoxymethylene resin composition comprises a polyoxymethylene resin (A), a silicone compound-grafted polyolefinic resin (B-1) and a silicone compound (B-2), the amount of the silicone compound-grafted polyolefinic resin (B1) being 0.05 to 10 parts by weight on the basis of 100 parts by weight of the polyoxymethylene resin (A), and the ratio of (B1)/(B2) by weight in the composition being 99/1 to 70/30.

WO 2016/151946 A1 describes a polyacetal resin composition and a sliding member able to suppress the generation of creaking sounds when sliding. The polyacetal resin composition comprises 100 parts by weight of a polyacetal resin (A), 0.01 parts by weight to 1 part by weight of a hindered phenolic antioxidant (B), 0.01 parts by weight to 1 part by weight of a nitrogenous compound (C), 0.1 parts by weight to 1 part by weight of a graft copolymer (D), 0.1 parts by weight to 1 part by weight of a fatty acid ester (E), 0.5 parts by weight to 5 parts by weight of a silicone oil (F), and 0.1 parts by weight to 1 part by weight of calcium carbonate (G), wherein the nitrogenous compound (C) is at least one selected from the group consisting of an aminotriazine compound, a guanamine compound, a hydrazide compound, and a polyamide compound, the graft copolymer (D) has an olefin-based polymer (d1) as a main chain, and comprises a vinyl-based polymer (d2) as a side chain, the fatty acid ester (E) is constituted from a fatty acid with a carbon number of 12 to 32 and from a monohydric or polyhydric alcohol with a carbon number of 2 to 30, and the calcium carbonate (G) has an average particle diameter of 1 µm or less.

WO 2016/051881 A1 describes a polyacetal resin composition and a sliding member having excellent sliding properties and abrasion resistance as well as excellent surface properties and peeling resistance. The polyacetal resin composition comprises (A) 100 parts by mass of a polyacetal resin; (B) from 0.01 parts by mass to 1 part by mass of a hindered phenol-based antioxidizing agent; (C) from 0.05 parts by mass to 1 part by mass of a nitrogen-containing compound; (D) from 0.5 parts by mass to 10 parts by mass of a modified olefin-based polymer in which an olefin-based polymer is modified with at least one selected from unsaturated carboxylic acid, acid anhydrides of unsaturated fatty acid, and derivatives thereof; (E) an alkylene glycol-based polymer having a number average molecular weight of 400 or more and 500,000 or less and having a primary amino group or a secondary amino group; (F) from 0.1 parts by mass to 20 parts by mass of surface-untreated and substantially cube-shaped calcium carbonate having a BET specific surface area of 15 m²/g or less and a mean particle size of 50 nm or more and 200 nm or less; (G) from 0.1 parts by mass to 10 parts by mass of a partial ester of a polyhydric alcohol having a valence of 2 or more and 4 or less; and (H) from 0.1 parts by mass to 10 parts by mass of an alpha olefin oligomer.

DE 10 2016 109 992 A1 describes a polyacetal resin composition for a resin sliding member and a resin sliding member as well as a window regulator carrier plate. The polyacetal resin composition comprises 10 to 100 parts by weight of a glass filler per 100 parts by weight of the polyacetal resin.

JP 2016-069452 A and JP 2016-069453 A describe polyacetal resin compositions and corresponding sliding members.

### SUMMARY OF INVENTION

### TECHNICAL PROBLEM

The object of the present invention is to provide a window regulator carrier plate based on a resin composition which, even in an environment in which dust such as sand and moisture exist, exhibits excellent friction and wear resistance and suffers little abnormal noise generation during sliding.

### SOLUTION TO PROBLEM

(1) A window regulator carrier plate, produced using a resin composition for a dust-resistant sliding member, the resin composition consisting of 0.5 to 5.0 parts by mass of a lubricant that is liquid at 25°C and is consisting of at least one material selected from the group consisting of ethylene/α-olefin copolymers, poly-α-olefins and silicones, 0.1 to 30 parts by mass of an inorganic filler, 100 parts by mass of a polyacetal resin having a melt molding processability as defined by a melt flow rate of 1.0 to 100 g/10 min as measured at 190°C and 2.160 g load, and conventional additives selected from the group consisting of antioxidants, costabilizers, and compatibilizers.
(2) The window regulator carrier plate according to (1), wherein the lubricant is an ethylene-propylene copolymer.
(3) The window regulator carrier plate according to (1) or (2), wherein the inorganic filler is at least one material selected from the group consisting of calcium carbonate, magnesium oxide, aluminum oxide, talc and glass beads.
(4) The window regulator carrier plate according to any one of (1) to (3), wherein the conventional additives are antioxidants.

### ADVANTAGEOUS EFFECTS OF INVENTION

The present invention is able to provide a window regulator carrier plate which, even in an environment in which dust such as sand and moisture exist, exhibits excellent friction and wear resistance and suffers little abnormal noise generation during sliding.

### DESCRIPTION OF EMBODIMENTS

### <Resin Composition for Dust-Resistant Sliding Member>

The resin composition for a dust-resistant sliding member from which the window regulator carrier plate of the present invention is produced (hereafter also referred to as simply "the resin composition") consists of 0.5 to 5.0 parts by mass of a lubricant that is liquid at 25°C and is consisting of at least one material selected from the group consisting of ethylene/α-olefin copolymers, poly-α-olefins and silicones, 0.1 to 30 parts by mass of an inorganic filler, 100 parts by mass of a polyacetal resin having a melt molding processability as defined by a melt flow rate of 1.0 to 100 g/10 min as measured at 190°C and 2.160 g load, and conventional additives selected from the group consisting of antioxidants, costabilizers, and compatibilizers.

Here, the expression "dust-resistant sliding" refers to performance that exhibits excellent friction and wear resistance and good suppression of abnormal noise generation, even in environments in which dust such as sand and moisture such as rainwater exist. The expression "friction and wear resistance" means having good durability relative to friction and abrasion.

As mentioned above, the resin composition for a dust-resistant sliding member from which the window regulator carrier plate of the present invention is produced has the effects of providing excellent friction and wear resistance and little abnormal noise generation during sliding, even in environments in which dust such as sand and moisture exist. The mechanism of those effects is described below.

Polyacetal resins are prone to the generation of abnormal noises known as squeak noises when sliding occurs between polyacetal resin members. In order to ameliorate this problem, a technique is used in which a lubricant is added to prevent sliding between the polyacetal resin members. However, in the above type of environments where dust and moisture exist, the occurrence of abnormal noises is unable to be satisfactorily suppressed using this technique. One reason for this is that when sliding occurs at the sliding surface of a resin molded item, the heat generated by sliding increases the temperature, but if moisture is present, then the temperature is less likely to rise. Accordingly, in the case where a solid lubricant is used, the solid lubricant is less likely to undergo a phase change to a liquid, meaning the inherent functionality of the lubricant is less likely to manifest. Moreover, if dust such as sand exists on the sliding surface, then the generation of wear debris tends to be accelerated by the dust. As a result, a sliding state between polyacetal resin members develops between the resin molded article and the wear debris, under conditions in which the lubricant is unable to function efficiently, leading to the occurrence of squeak noises.

Accordingly, a specific lubricant that is a liquid at 25°C is used in the present invention, meaning the inherent functionality of the lubricant can manifest even in environments in which moisture exists. However, investigations by the inventors of the present invention revealed that the generation of abnormal noises could not be satisfactorily suppressed simply be using this lubricant. It is thought that this is because, in the presence of dust, localized increases in surface pressure occur on the sliding surface. Accordingly, an inorganic filler is also used to suppress this type of localized increase in surface pressure, thereby suppressing the occurrence of abnormal noises.

Each of the components of the resin composition from which the window regulator carrier plate according to the present invention is produced is described below.

### [Polyacetal Resin]

The polyacetal resin is a polymer compound containing oxymethylene groups (-CH₂O-) as the main structural unit and may be either a polyoxymethylene homopolymer or an oxymethylene copolymer. An oxymethylene copolymer contains oxymethylene groups as the main repeating unit, and also contains a small amount of one or more other structural units such as comonomer units of ethylene oxide, 1,3-dioxolane, or 1,4-butanediol formal. Further, other types of polymers such as terpolymers and block polymers also exist, and these types of polymers may also be used. Furthermore, the polyacetal resin is not limited to linear molecules, and may include molecules having branched or crosslinked structures. Conventional modified polyoxymethylenes containing other introduced organic groups may also be used. When it comes to limitations of the polymerization degree of the polyacetal resin, the resin having a melt molding processability as defined by a melt flow rate (MFR) at 190°C and a load of 2,160 g of at least 1.0 g/10 min but not more than 100 g/10 min).

The polyacetal resin may be produced using known production methods.

### [Lubricant]

The lubricant used in the present invention is at least one material selected from the group consisting of ethylene/α-olefin copolymers, poly-α-olefins and silicones, and is a liquid at 25°C. Because the lubricant is a liquid at 25°C, it remains a liquid even in environments containing moisture where the temperature is less likely to rise and can therefore still function satisfactorily as a lubricant.

Examples of the ethylene/α-olefin copolymers include copolymers of ethylene and α-olefins having a carbon number of 3 to 20. For example, ethylene-propylene copolymers, ethylene-butylene copolymers and ethylene-hexene copolymers are preferred, and of these, ethylene-propylene copolymers are particularly preferred.

Examples of the poly-α-olefins include polymers of α-olefins having a carbon number of 6 to 18, and of these, polymers of α-olefins having a carbon number of 10 to 16 are preferred.

Examples of the silicones include dimethylpolysiloxanes, methylphenylpolysiloxanes and methylhydrogenpolysiloxanes, and of these, dimethylpolysiloxanes are preferred.

Any of the ethylene/α-olefin copolymers, poly-α-olefins and silicones may be used individually, or a combination of materials may be used. Further, among ethylene/α-olefin copolymers, poly-α-olefins and silicones, in terms of suppressing squeak noises, ethylene/α-olefin copolymers are preferred.

The lubricant is included in an amount of 0.5 to 5.0 parts by mass per 100 parts by mass of the polyacetal resin. If the amount of the lubricant is less than 0.5 parts by mass, then the occurrence of squeak noises cannot be satisfactorily suppressed, whereas if the amount exceeds 5.0 parts by mass, the manufacturability deteriorates markedly. The amount of the lubricant is preferably from 0.8 to 4.0 parts by mass, and more preferably from 1.0 to 2.0 parts by mass.

### [Inorganic Filler]

Examples of inorganic fillers that may be used in the present invention include metal carbonates, metal sulfates, metal oxides, talc, mica, glass beads and glass flakes. Of these, calcium carbonate, magnesium oxide, aluminum oxide, talc and glass beads are preferred. These inorganic fillers may be used individually, or a combination of two or more different inorganic fillers may be used.

In the present invention, the inorganic filler is included in an amount of 0.1 to 30 parts by mass per 100 parts by mass of the polyacetal resin. If the amount of the inorganic filler is less than 0.1 parts by mass, then the occurrence of squeak noises cannot be satisfactorily suppressed, whereas if the amount exceeds 30 parts by mass, then deterioration in the mechanical properties becomes marked. The amount of the inorganic filler is preferably from 0.2 to 20 parts by mass, and more preferably from 0.3 to 10 parts by mass.

In the present invention, the mass ratio (X/Y) between the lubricant (X) and the inorganic filler (Y) is preferably from 1.5 to 5.0.

### [Other Components]

The resin composition from which the window regulator carrier plate of the present invention is produced also includes conventional additives selected from the group consisting of antioxidants, costabilizers, and compatibilizers as other components.

### <Dust-Resistant Sliding Member>

The window regulator carrier plate of the present invention is a dust-resistant sliding member and it is produced using the resin composition for a dust-resistant sliding member described above. As mentioned above, it exhibits excellent friction and wear resistance and suffers little abnormal noise generation during sliding, even in environments in which dust such as sand and moisture exist.

Apart from a window regulator carrier plate, also other dust-resistant sliding members may be obtained by molding the resin composition described above, such as sliding members for vehicle sunroofs, and mechanism members for vehicle door checkers. Also such a dust-resistant sliding member is ideal as a member used in environments in which dust and water exist. However, such other dust-resistant sliding members are not covered by the present invention.

### <Window Regulator Carrier Plate>

A window regulator carrier plate according to the present invention is produced using the resin composition for a dust-resistant sliding member as described above. As mentioned above, a window regulator is a mechanism for raising and lowering the door glass of an automobile, and the carrier plate that supports the door glass is produced using the resin composition according to the present invention. Dust such as sand and moisture such as rainwater can sometimes penetrate into the interior of doors of vehicles such as automobiles. However, even in these types of cases, if the carrier plate of the present invention is installed, then the carrier plate exhibits excellent friction and wear resistance, and the generation of abnormal noises such as squeak noises when the window is raised and lowered, namely when the carrier plate undergoes sliding, can be suppressed.

### <Method for Producing Dust-Resistant Sliding Member>

A method for producing a dust-resistant sliding member which is a window regulator carrier plate according to the present invention includes a step (hereafter referred to as "step A") of preparing a resin composition consisting of 0.5 to 5.0 parts by mass of a lubricant that is liquid at 25°C and is consisting of at least one material selected from the group consisting of ethylene/α-olefin copolymers, poly-α-olefins and silicones, 0.1 to 30 parts by mass of an inorganic filler, 100 parts by mass of a polyacetal resin having a melt molding processability as defined by a melt flow rate of 1.0 to 100 g/10 min as measured at 190°C and 2.160 g load, and conventional additives selected from the group consisting of antioxidants, costabilizers, and compatibilizers, and a step (hereafter referred to as "step B") of molding the resin composition into a prescribed shape. Each step is described below.

### [Step A]

In this step, a resin composition is prepared that consists of 0.5 to 5.0 parts by mass of a lubricant that is liquid at 25°C and is consisting of at least one material selected from the group consisting of ethylene/α-olefin copolymers, poly-α-olefins and silicones, 0.1 to 30 parts by mass of an inorganic filler, 100 parts by mass of a polyacetal resin having a melt molding processability as defined by a melt flow rate of 1.0 to 100 g/10 min as measured at 190°C and 2.160 g load, and conventional additives selected from the group consisting of antioxidants, costabilizers, and compatibilizers. Examples of preferred materials for each of the components, and preferred amounts for each of the components are all the same as described above. The resin composition can be obtained by normal methods, by mixing each of the above components. For example, the resin composition can be obtained by supplying the components to an extruder, and performing melt-kneading and pelletization.

### [Step B]

In this step, the resin composition prepared in the above step A is molded into a prescribed shape. For example, the pellets obtained in the manner described above may be subjected to injection molding by introduction into an injection molding machine having a prescribed mold.

The production method described above is able to produce a dust-resistant sliding member which is a window regulator carrier plate according to the present invention which, as mentioned above, exhibits excellent friction and wear resistance and suffers little abnormal noise generation during sliding, even in environments in which dust such as sand and moisture exist.

### Examples

The present invention is described below in further detail based on a series of examples, but the present invention is in no way limited by these examples.

### [Examples 1 to 10, Comparative Examples 1 to 5]

In each example and comparative example, the raw material components shown in Table 1 or Table 2 were dry-blended, and the resulting mixture was introduced into a twin-screw extruder having a cylinder temperature of 200°C, subjected to melt-kneading, and then pelletized. In Table 1 and Table 2, the numerical value for each component indicates a number of parts by mass.

Details regarding each of the raw material components used are listed below.
Polyacetal resin: a polyacetal copolymer obtained by copolymerizing 96.7% by mass of trioxane and 3.3% by mass of 1,3-dioxolane (melt index (measured at 190°C and a load of 2,160 g): 2.5 g/10min)
Lubricant 1: an ethylene-propylene copolymer (pour point: -15°C, LUCANT HC600, manufactured by Mitsui Chemicals, Inc.)
Lubricant 2: a dimethylpolysiloxane (pour point: -41°C, SH200, manufactured by Dow Corning Toray Co., Ltd.)
Lubricant 3: a paraffin oil (pour point: -15°C, Diana Process Oil PW380, manufactured by Idemitsu Kosan Co., Ltd.)
Inorganic filler 1: calcium carbonate (SL-101, manufactured by Shiraishi Calcium Kaisha, Ltd.)
Inorganic filler 2: calcium carbonate (Brilliant-1500, manufactured by Shiraishi Calcium Kaisha, Ltd.)
Inorganic filler 3: calcium carbonate (Whiton P-30, manufactured by Shiraishi Calcium Kaisha, Ltd.)
Inorganic filler 4: talc (Crown Talc PP, manufactured by Shiraishi Calcium Kaisha, Ltd.)
Inorganic filler 5: magnesium oxide (KYOWAMAG 150, manufactured by Kyowa Chemical Industry Co., Ltd.)
Inorganic filler 6: magnesium oxide (KYOWAMAG MF30, manufactured by Kyowa Chemical Industry Co., Ltd.)
Inorganic filler 7: glass beads (GL-BS, manufactured by Potters-Ballotini Co., Ltd.)
Inorganic filler 8: aluminum oxide (manufactured by Wako Pure Chemical Industries, Ltd.)
Antioxidant: Irganox 1010, manufactured by BASF Corporation.

**[Table 1]**

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| POM resin | | 100 | 100 | 100 | 100 | 100 | 100 | 100 | 100 | 100 | 100 |
| Lubricant 1 | Ethylene-propylene copolymer | 1 | 2 | - | 1 | 1 | 1 | 1 | 1 | 1 | 1 |
| Lubricant 2 | Dimethylpolysiloxane | - | - | 1 | - | - | - | - | - | - | - |
| Inorganic filler 1 | Calcium carbonate | 0.5 | 0.5 | 0.5 | - | - | - | - | - | - | - |
| Inorganic filler 2 | Calcium carbonate | - | - | - | 0.5 | - | - | - | - | - | - |
| Inorganic filler 3 | Calcium carbonate | - | - | - | - | 0.5 | - | - | - | - | - |
| Inorganic filler 4 | Talc | - | - | - | - | - | 0.5 | - | - | - | - |
| Inorganic filler 5 | Magnesium oxide | - | - | - | - | - | - | 0.5 | - | - | - |
| Inorganic filler 6 | Magnesium oxide | - | - | - | - | - | - | - | 0.5 | - | - |
| Inorganic filler 7 | Glass beads | - | - | - | - | - | - | - | - | 0.5 | |
| Inorganic filler 8 | Aluminum oxide | - | - | - | - | - | - | - | - | - | 0.5 |
| Antioxidant | Hindered phenol system | 0.21 | 0.21 | 0.21 | 0.21 | 0.21 | 0.21 | 0.21 | 0.21 | 0.21 | 0.21 |
| Dust-resistant slidability | Squeak noise (%) | 37 | 0 | 72 | 3 | 4 | 11 | 45 | 0 | 0 | 22 |
| | Friction and wear resistance: Coefficient of dynamic friction (-) | 0.35 | 0.37 | 0.34 | 0.34 | 0.31 | 0.31 | 0.35 | 0.30 | 0.28 | 0.36 |

**[Table 2]**

| | | Comparative Example 1 | Comparative Example 2 | Comparative Example 3 | Comparative Example 4 | Comparative Example 5 |
|---|---|---|---|---|---|---|
| POM resin | | 100 | 100 | 100 | 100 | 100 |
| Lubricant 1 | Ethylene-propylene copolymer | - | - | 1 | 0.3 | - |
| Lubricant 3 | Paraffin oil | - | - | - | - | 1 |
| Inorganic filler 1 | Calcium carbonate | - | 0.5 | - | 0.5 | 0.5 |
| Antioxidant | Hindered phenol system | 0.21 | 0.21 | 0.21 | 0.21 | 0.21 |
| Dust-resistant slidability | Squeak noise (%) | 100 | 100 | 100 | 100 | 100 |
| | Friction and wear resistance: Coefficient of dynamic friction (-) | 0.39 | 0.41 | 0.37 | 0.40 | 0.41 |

### <Evaluations>

Using the obtained resin composition pellets, hollow circular cylindrical test pieces were produced by injection molding (mold temperature: 80°C, cylinder temperature: 200°C), and the evaluation tests described below were performed. In each test, in order to generate an environment in which dust and moisture existed, a dusty water prepared by dispersing ISO test dust 12103-1 A4 in pure water at a concentration of 2.5% by mass was applied to the sliding surface.

### [Dust-Resistant Slidability]

In order to evaluate the dust-resistant slidability, evaluations of squeak noises and the friction and wear resistance (coefficient of dynamic friction) were performed. Details regarding the test conditions are described below.

### (Test conditions)

Test device: thrust-type friction and wear tester EFM-III-E, manufactured by Orientec Co., Ltd.
Surface pressure: 1.0 MPa (load 200 N)
Environment: 23°C, 50% RH
Linear speed: 10 mm/sec
Test duration: 3 hours (dusty water was applied, and after sliding for 2 hours, dusty water was reapplied, and sliding was continued for a further 1 hour)
Opposing material: polyethylene-coated flat sheet

### (Evaluation items)

(1) Squeak noise (%): for the final 1 hour of the test, the percentage of time during which squeak noises occurred (%) was recorded.
(2) Coefficient of dynamic friction (-): calculated from the value for the frictional force detected with a load cell. The average value for the final 1 hour of the test was recorded.

Based on Table 1 and Table 2, it is evident that each example exhibited good friction and wear resistance and displayed a reduced level of squeak noise. In other words, it is evident that a member having excellent dust-resistant slidability was able to be obtained in each of the examples. In contrast, none of the comparative examples was able to achieve favorable results for both the squeak noise evaluation and the friction and wear resistance evaluation.

In particular, by comparing all of the examples with Comparative Examples 2 and 3, it is evident that favorable evaluation results could not be achieved by using only one of the lubricant and the inorganic filler. Further, by comparing all of the examples and Comparative Example 4, it is evident that even when both a lubricant and an inorganic filler are included, favorable evaluation results may not necessarily be obtainable, depending on the amount of each component.

## Claims

1. A window regulator carrier plate, produced using a resin composition for a dust-resistant sliding member, the resin composition consisting of 0.5 to 5.0 parts by mass of a lubricant that is liquid at 25°C and is consisting of at least one material selected from the group consisting of ethylene/α-olefin copolymers, poly-α-olefins and silicones, 0.1 to 30 parts by mass of an inorganic filler, 100 parts by mass of a polyacetal resin having a melt molding processability as defined by a melt flow rate of 1.0 to 100 g/10 min as measured at 190°C and 2.160 g load, and conventional additives selected from the group consisting of antioxidants, costabilizers, and compatibilizers.

2. The window regulator carrier plate according to claim 1, wherein the lubricant is an ethylene-propylene copolymer.

3. The window regulator carrier plate according to claim 1 or 2, wherein the inorganic filler is at least one material selected from the group consisting of calcium carbonate, magnesium oxide, aluminum oxide, talc and glass beads.

4. The window regulator carrier plate according to any one of claims 1 to 3, wherein the conventional additives are antioxidants.

## Patentansprüche

1. Eine Trägerplatte für einen Fensterheber, hergestellt unter Verwendung einer Harzzusammensetzung für ein gegen Staub resistentes Gleitelement, die Harzzusammensetzung bestehend aus 0,5 bis 5,0 Gewichtsteilen eines Schmiermittels, das bei 25°C flüssig ist, und aus mindestens einem Material besteht, das ausgewählt ist aus der Gruppe bestehend aus Ethylene/α-Olefin Copolymeren, Poly-α-Olefinen und Siliconen, 0,1 bis 30 Gewichtsteilen eines anorganischen Füllstoffes, 100 Gewichtsteilen eines Polyacetal-Harzes mit einer Verarbeitbarkeit im Schmelzverfahren, die durch eine Schmelzflussrate von 1,0 bis 100 g/10 min definiert ist, gemessen bei 190°C und einer Last von 2,160 g, und konventionellen Additiven, die ausgewählt sind aus der Gruppe bestehend aus Antioxidantien, Costabilisatoren und Kompatibilitätsmitteln.

2. Die Trägerplatte für einen Fensterheber gemäß Anspruch 1, wobei das Schmiermittel ein Ethylene-Propylene Copolymer ist.

3. Die Trägerplatte für einen Fensterheber gemäß Anspruch 1 oder 2, wobei der anorganische Füllstoff mindestens ein Material ist, das ausgewählt ist aus der Gruppe bestehend aus Calciumcarbonat, Magnesiumoxid, Aluminiumoxid, Talkum und Glaskugeln.

4. Die Trägerplatte für einen Fensterheber gemäß einem der Ansprüche 1 bis 3, wobei die konventionellen Additive Antioxidantien sind.

## Revendications

1. Plaque support de lève-vitre, produite en utilisant une composition de résine pour un organe coulissant résistant à la poussière, la composition de résine consistant en 0,5 à 5,0 parties en masse d'un lubrifiant qui est liquide à 25°C et consistant en au moins un matériau sélectionné dans le groupe consistant en des copolymères d'éthylène/α-oléfine, des poly-α-oléfines et des silicones, 0,1 à 30 parties en masse d'une charge inorganique, 100 parties en masse d'une résine de polyacétal présentant une aptitude au moulage à l'état fondu telle que définie par un indice de fluidité à chaud de 1,0 à 100 g/10 min mesuré à 190°C et une charge de 2,160 g, et des additifs conventionnels sélectionnés dans le groupe consistant en des antioxydants, des co-stabilisants et des agents de compatibilité.

2. Plaque support de lève-vitre selon la revendication 1, dans laquelle le lubrifiant est un copolymère d'éthylène-propylène.

3. Plaque support de lève-vitre selon la revendication 1 ou 2, dans laquelle la charge inorganique est au moins un matériau sélectionné dans le groupe consistant en le carbonate de calcium, l'oxyde de magnésium, l'oxyde d'aluminium, le talc et des billes de verre.

4. Plaque support de lève-vitre selon l'une des revendications 1 à 3, dans laquelle les additifs conventionnels sont des antioxydants.
